Europäisches Patentamt

European Patent Office

Office européen des brevets

(11) Veröffentlichungsnummer: **0 422 393 A2**

## (12) EUROPÄISCHE PATENTANMELDUNG

(21) Anmeldenummer: 90117368.2

(22) Anmeldetag: 10.09.90

(51) Int. Cl.5: **A01L 7/04, A01L 7/06**

(30) Priorität: **11.09.89 DE 8910831 U**

(43) Veröffentlichungstag der Anmeldung:
**17.04.91 Patentblatt 91/16**

(84) Benannte Vertragsstaaten:
**AT BE CH DE DK ES FR GB GR IT LI LU NL SE**

(71) Anmelder: **Poth, Johannes**
**Kastanienweg 13**
**W-5372 Gemünd/Schleiden(DE)**

(72) Erfinder: **Poth, Johannes**
**Kastanienweg 13**
**W-5372 Gemünd/Schleiden(DE)**

(54) Hufeisen mit Federklemmstollen.

(57) Zur Verminderung des hohen Arbeitsaufwandes bei der Reinigung, der durch Anschrauben gehaltenen Stollen und deren Stollenlöcher und der starken Belastung der Pferdegelenke aufgrund des Festdrehens können Hufeisen mit Federklemmstollen verwendet werden. Bei diesen Hufeisen mit Federklemmstollen wird der Stollen (5) dadurch gehalten, daß jeder als Steckstollen ausgebildet ist. Das Einsteckende (Sa) wird von einem dazu passend geformten Einsteckloch (2) im Hufeisen (1) aufgenommen und von einer am Steckstollen (5) befestigten, U-förmigen Federklammer (4) am Hufeisen gehalten. An den Hufeisen (1) werden im Bereich der U-förmigen Feder (4) Einsenkungen (3) vorgenommen. Diese sind der Form der U-förmigen Federklammern (4) und die Einstecklöcher der Form von Einsteckenden (5a) angepaßt, derart, daß die FederKlammern (4) nach Bestücken der Hufeisen (1) mit den Steckstollen (5) seitlich bündig mit den Hufeisenseitenflächen (1b) abschließen und im Bereich der Laufflächen (1a) desselben vertieft liegen. Stollen werden bedingt durch die Bodenverhältnisse immer dann benutzt, wenn für Pferde die Gefahr/Möglichkeit des Rutschens besteht.

FIG.1

FIG.2

EP 0 422 393 A2

# HUFEISEN MIT FEDERKLEMMSTOLLEN:

Die Erfindung betrifft Hufeisen für z.B. im Leistungssport eingesetzte Reitpferde mit lösbar in Löchern des Hufeisens mittels Befestigungsenden fixierbaren Stollen.

Die Stollen dienen z.B. als Absprunghilfe beim Springreiten und werden erst unmittelbar vor dem Springreiten in die Hufeisen eingeschraubt und nach dem Springreiten wieder aus dem Hufeisen entfernt. Die Pferde laufen also üblicherweise auf Hufeisen, die nicht mit Stollen bestückt sind. Die zur Aufnahme der herkömmlichen Stollen im Hufeisen vorgesehenen Gewindelöcher liegen somit offen und setzen sich mit Erde, Sand, Steinchen und dergleichen zu und können auch leicht beschädigt werden. Deshalb müssen die Gewindelöcher jedesmal in aufwendiger Weise gereinigt und u.U. auch nachgeschnitten werden, bevor ein Einschrauben der Stollen möglich ist.

Um die Gewinde der Gewindelöcher der Hufeisen nach Herausschrauben der Stollen gegen Verschmutzung und Beschädigung zu schützen ist vorgeschlagen worden, die Gewindelöcher mittels Gewindestopfen aus Kunsstoff oder Stopfen aus formelastischem Material zu verschließen (G 81 03 756.2 und DE-OS 26 51 660). Hierdurch werden die Gewindelöcher der Hufeisen vor geringfügiger Verschmutzung geschützt, jedoch nicht vor Beschädigung durch hartes Material. Das Einschrauben der Gewindestopfen und der Stollen selbst in die Gewindelöcher der Hufeisen ist aber sehr zeitaufwendig und umständlich. Auch wenn die Gewindelöcher mittels Stopfen aus formelastischem Material in einfacher Weise durch Einstecken verschlossen werden können (DE-OS 26 51 660), müssen die bekannten Schraubstollen in die Gewindelöcher bei Bedarf ein- und bei Nichtbedarf ausgeschraubt werden. Dies ist sehr zeitaufwendig und mühselig, da in der Regel jedes Hufeisen zwei Gewindelöcher aufweist und somit bei jedem Pferd acht derartige Schraubstollen ein- bzw. ausgeschraubt werden müssen. Das Ein- und Ausschrauben der bekannten Schraubstollen hat darüber hinaus den Nachteile daß die Gelenke der Pferde bei jedem Schraubvorgang durch die Drehbelastung zusätzlich beansprucht werden. Die dabei auftretenden Kräfte können erheblich sein, wenn die Gewinde infolge Korrosion, die auch durch Verschließen der Aufnahmelöcher nicht ausgeschlossen werden kann, nicht mehr leichtgängig sind.

Der Erfindung liegt daher die Aufgabe zugrunde, ein lösbare Stollen aufweisendes Hufeisen zu entwickeln, bei dem die Stollen einfacher und müheloser als bisher zu befestigen sind und bei denen eine Beanspruchung der Pferdegelenke auf Torsion entfällt.

Diese Aufgabe wird neuerungsgemäß dadurch gelöst, daß ein jeder der Stollen als Steckstollen ausgebildet ist und mittels seines Einsteckendes von einem entsprechend geformten Einstecklöch im Hufeisen aufgenommen sowie mittels einer am Steckstollen befestigten, U-förmigen Federklammer am Hufeisen gehalten ist.

Hierdurch ist es möglich, die Stollen in einfacher Weise mittels eines kurzen, leichten Druckes am Hufeisen zu befestigen. Ein mühseliges Einschrauben der Stollen wird entbehrlich und Zeit eingespart.

Die Federklammer an den Steckstollen umgreift den Hufeisenquerschnitt an seinen Eckkanten und ist vertieft aufgenommen. Hierdurch sind die Steckstollen gegen Herausfallen gesichert. Zudem können die Einsteckenden der Steckstollen und die Aufnahmelöcher in den Hufeisen in vorteilhafter Weise so bemessen sein, daß die Einsteckenden darin durch Einpressung (z.B. Gewicht des Pferdes) im Pressitz gehalten sind, wodurch eine zusätzliche Sicherung gegen Herausfallen gewährleistet ist. An sich genügt aber die Anordnung der Federklammer allein, um die Steckstollen auch bei stärkster Beanspruchung am Hufeisen zu halten. Sämtliche horizontal wirkenden Kräfte werden in vorteilhafter Weise durch das Einsteckende der Steckstollen, dessen Länge der Stärke des Hufeisens entspricht, aufgenommen.

Sollen die erfindungsgemäßen Steckstollen vom Hufeisen entfernt werden, können diese in einfacher Weise mittels einer passend geformten Zange (G 89 11 546.5) mitsamt den Federklammern abgezogen werden.

Weitere vorteilhafte Ausgestaltungen der Erfindung sind den Unteransprüchen zu entnehmen.

Die Erfindung ist anhand eines Ausführungsbeispieles schematisch in den Zeichnungen dargestellt. Es zeigen:

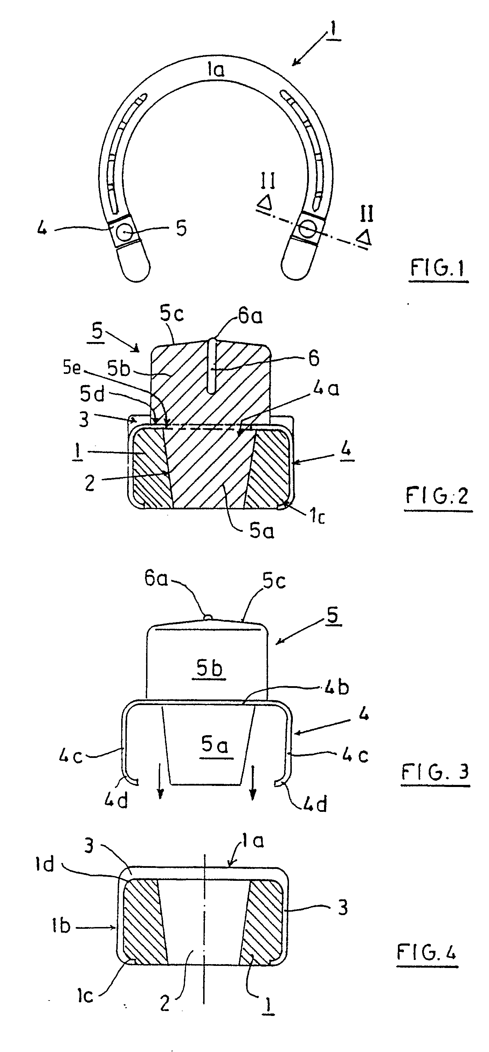

Fig. 1 - ein erfindunggsgemäß mit Einsteckstollen ausgestattetes Hufeisen in der Ansicht mit Blick auf die Lauffläche, verkleinert,

Fig. 2 - einen vergrößerten Querschnitt durch das Hufeisen im Bereich eines der Steckstollen gemäß Linie II-II in Fig. 1, wobei die Lauffläche des Hufeisens in der Zeichnung oben angeordnet ist,

Fig. 3 - die Seitenansicht des erfindungsgemäßen Einsteckstollens mitsamt Federklammer, ohne Hufeisen, wobei die beiden parallelen Pfeile die Aufsteckrichtung darstellen und

Fig. 4 - einen Querschnitt durch das erfindungsgemäße Hufeisen im Bereich des Einstecklöches für den erfindungsgemäßen Einsteckstollen.

Das als Ausführungsbeispiel dargestellte Hufeisen (1) ist mit konisch von der Lauffläche (1a) des Hufeisens (1) weg sich verjüngenden Einstecklöchern (2) versehen. Im Bereich eines jeden Einsteckloches (2) sind Einfräsungen (3) auf der Lauffläche (1a) des Hufeisens (1) vorgesehen, die sich auch in die Hufeisen seitenflächen (1b) fortsetzen und bis in die der Lauffläche (1a) gegenüberliegenden Eckkanten (1c) reichen. Die Eckkanten (1d) an der Lauffläche (1a) des Hufeisens (1) sind durchgehend abgerundet oder abgeschrägt.

Die Einfrasungen (3) sind der Form von U-förmigen Federklammern (4) bestimmter Breite und die Einstecklöcher (2) der Form von Einsteckenden (5a) von Steckstollen (5) angepaßt, derart, daß die Federklammern (4) nach Bestücken der Hufeisen (1) mit den Steckstollen (5) seitlich bündig mit den Hufeisenseitenflächen (1b) abschließen und im Bereich der Lauffläche (1a) desselben vertieft liegen. Die Eckkanten (1d) im Bereich der Lauffläche (1a) des Hufeisens (1) sind durchgehend abgerundet oder abggeschrägt, um das Aufbringen der Federklammer (4) der Steckstollen (5) zu erleichtern. Die Steckstollen (5) bestehen aus einem kegelstumpfförmigen Einsteckende (5a) und einem beliebig geformten Stollenteil (5b) mit flacher Spitze (5c), in deren Zentrum ein Widia-Stahlstift (6) eingelassen ist, dessen abgerundetes Ende über die Oberfläche der flachen Spitze (5c) des Steckstollens (5) hinausragt und eine kleine abgerundete, aufgesetzte Spitze (6a) bildet.

Auf das Einsteckende (5a) des Steckstollens (5) ist die U-förmige Federklammer (4) mit ihrer zentrischen Aufnahmebohrung (4a) im U-Rücken (4b) aufgeschoben, liegt am zwischen Einsteckende und(5a) und Stollenteil (5b) des Steckstollens (5) gebildeten Absatz (5d) an und ist dort in dieser Position in beliebiger Weise unverlierbar fixiert. Die Enden (4d) der U-Schenkel (4c) der Federklammer (4) sind zueinander gebogen. Sie umgreifen den Hufeisenquerschnitt an den der Lauffläche (1a) gegenüberliegenden, teilweise abgerundeten oder abgeschrägten Eckkanten (1c). Auch in diesem Bereich ist die Hufeisenoberfläche durch die Einsenkung vertieft, derart, daß die Enden (4d) der U-Schenkel (4c) der Federklammer (4) bündig oder vertieft mit der übrigen Oberfläche des Hufeisens verlaufen.

Alle in den Ansprüchen, der Beschreibung und/oder den Zeichnungen dargestellten Einzel- und Kombinationsmerkmale werden als erfindungswesentlich angesehen.

Der Schutzumfang der Erfindung erstreckt sich nicht nur auf die Merkmale der einzelnen Ansprüche, sondern auch auf deren Kombination.

Es versteht sich von selbst, daß die Erfindung nicht nur auf das dargestellte und beschriebene Ausführungsbeispiel beschränkt sein soll. Dieses stellte nur eine mögliche, vorteilhafte Ausgestaltungsform des Erfindungsgedankens dar

So kann bspw. die Federklammer auch dadurch auf dem Einsteckende fixiert werden, daß ein Ringteil auf das Einsteckende mit der Federklammer in bekannter Weise aufgeschrumpft wird.

Desweiteren kann die zentrische Bohrung des U-Rückens als Krallenkranz ausgebildet sein, welcher in einer umlaufenden Ringnut unverlierbar gehalten wird. Auch können Einsteckende und Einsteckloch in beliebiger Weise zueinander passend kantig gestaltet sein, um ein Verdrehen des Stollens im Einsteckloch zu verhindern.

## Ansprüche

1. Hufeisen für z.B. im Leistungssport eingesetzte Reitpferde mit lösbar in Löchern des Hufeisens mittels Befestigungsenden fixierbaren Stollen,
dadurch gekennzeichnet,
daß ein jeder der Stollen als Steckstollen (5) im oberen Teil (5b) beliebig geformt ausgebildet ist und mittels seines Einsteckendes (5a) von einem entsprechend geformten Einsteckloch (2) im Hufeisen (1) aufgenommen sowie mittels einer am Steckstollen (5) befestigten, U-förmigen Federklammer (4) am Hufeisen (1) gehalten ist.

2. Hufeisen nach Anspruch 1,
dadurch gekennzeichnet,
daß die U-förmige Federklammer (4) mit einer zentrischen Aufnahmebohrung (4a) in ihrem U-Rücken (4b) auf das Einsteckende (5a) des Steckstollens (5) aufgeschoben und unverlierbar auf der Unterseite des durch den größeren Umfang zwischen Einsteckende (5a) und Stollenteil (5b) gebildeten Absatzes (5d) gehalten ist und nach Aufstecken des Steckstollens (5) von einer hierzu passenden Vertiefung oder Einsenkung (3) in der Hufeisenoberfläche vertieft und/oder bündig vollständig aufgenommen ist, und daß die Enden (4d) der U-Schenkel (4c) der Federklammer (4) zueinander gebogen und so bemessen sind, daß sie den Hufeisenquerschnitt seitlich ganz oder teilweise und an seinen laufflächenfernen Eckkanten (1c) federnd umgreifen.

3. Hufeisen nach Anspruch 1 und 2,
dadurch gekennzeichnet,
daß das Einsteckende (5a) des Steckstollens (5) in beliebiger Weise rund oder kantig und das zugehörige Einsteckloch (2) im Hufeisen (1) entsprechend ausgebildet sind.

4. Hufeisen nach einem oder mehreren der Ansprüche 1 bis 3,
dadurch gekennzeichnet,
daß die Länge des Einsteckendes (5a) der Stärke des Hufeisens (1) im Bereich der Vertiefung oder Einsenkung (3) entspricht.

5. Hufeisen nach einem oder mehreren der Ansprüche 1 bis 4,
dadurch gekennzeichnet,
daß die zueinander gebogenen Enden (4d) der U-Schenkel (4c) der Federklammer (4) jedes Steckstollens (5) in entsprechend an den laufflächenfernen Eckkanten (1c) des Hufeisens (1) angeorgnete Vertiefungen (3) nach Aufsetzen federnd eingreifen.

6. Hufeisen nach einem oder mehreren der Ansprüche 1 bis 5,
dadurch gekennzeichnet,
daß die U-Schenkel (4c) der Federklammer (4) kürzer bemessen sind als die Stärke des Hufeisens (1) im Bereich der Vertiefung oder Einsenkung (3) mißt.

7. Hufeisen nach Anspruch 1-6,
dadurch gekennzeichnet,
daß die zueinander gebogenen Enden (4d) der U-Schenkel (4c) der Federklammer (4) in entsprechende, nutförmige Einsenkungen o.dgl. seitlich am Hufeisen (1) nach Aufsetzen federnd eingreifen.

8. Hufeisen nach einem oder mehreren der Ansprüche 1 bis 7,
dadurch gekennzeichnet,
daß die Federklammer (4) eines jeden Steckstollens (5) mit ihrer zentrischen Aufnahmebohrung (4a) auf das Einsteckende (5a) aufgeschoben und auf dem durch die Unterseite des Stollenteils (5b) gebildeten Absatz (5d) gehalten ist.

9. Hufeisen nach einem oder mehreren der Ansprüche 1 bis 8,
dadurch gekennzeichnet,
daß zur Halterung der Federklammer (4) am oberen Ende eine horizontal umlaufende Nut (5e) in das Einsteckende (5a) eingelassen ist, in die der Rand der Aufnahmebohrung (4a) z.B. als Krallenkranz ausgebildet im U-Rücken (4b) der Federklammer (4) eingreift.

10. Hufeisen nach einem oder mehreren der Ansprüche 1 bis 9,
dadurch gekennzeichnet,
daß die der Lauffläche (1a) des Hufeisens (1) benachbarten und laufflächenfernen Eckkanten (1d, 1c) im Bereich der für die Federklammer (4) eingelassenen Vertiefung (3) abgeschrägt oder abgerundet sind.

FIG.1

FIG.2

FIG. 3

FIG.4